# EUROPEAN PATENT SPECIFICATION

(11) **EP 4 344 158 B1**
(45) Date of publication and mention of the grant of the patent: **01.10.2025**
(21) Application number: 21945468.3
(22) Date of filing: 17.06.2021
(51) Int. Cl.: G06F 13/12, G06F 13/38, G06F 13/40, G06F 13/42, H04L 49/111, H04L 61/103, G06F 9/455, H04L 45/586, H04L 49/354, H04L 12/46, H04L 12/18, H04L 49/00

(54) **NETWORK INTERFACE CARD MANAGEMENT SYSTEM, PACKET PROCESSING METHOD, AND DEVICE**
NETZWERKSCHNITTSTELLENKARTENVERWALTUNGSSYSTEM, PAKETVERARBEITUNGSVERFAHREN UND VORRICHTUNG
SYSTÈME DE GESTION DE CARTE D'INTERFACE RÉSEAU, PROCÉDÉ DE TRAITEMENT DE PAQUETS ET DISPOSITIF

(43) Date of publication of application: 27.03.2024
(73) Proprietor: Huawei Technologies Co., Ltd., Longgang Shenzhen, Guangdong 518129 (CN)
(72) Inventor: QU, Huichun, Shenzhen, Guangdong 518129 (CN); HAN, Zhaojiao, Shenzhen, Guangdong 518129 (CN); LIAO, Zhijian, Shenzhen, Guangdong 518129 (CN); XU, Qiming, Shenzhen, Guangdong 518129 (CN); BAO, Jincheng, Shenzhen, Guangdong 518129 (CN)
(74) Representative: Gill Jennings & Every LLP
(86) International application number: PCT/CN2021/100484
(87) International publication number: WO 2022/261881

(56) References cited:
- CN-A- 103 873 489
- CN-A- 106 998 347
- CN-A- 112 905 304
- US-A1- 2014 003 442
- US-A1- 2014 059 266
- US-A1- 2014 122 675
- US-A1- 2018 335 971

## Description

### TECHNICAL FIELD

This application relates to the field of communications technologies, and in particular, to a network interface card management system, a packet processing method, and a device.

### BACKGROUND

Currently, a smart network interface card (smart network interface card, Smart NIC) has become an important part of a storage system, a data center, and the like. The smart network interface card supports multi-highspeed serial computer extended bus standard (peripheral component interconnect express, PCIe) ports and a plurality of hosts (Hosts), supports a plurality of PCIe ports on a host side for different hosts to share the smart network interface card, and is presented as an independent network interface card on a network side to communicate with other network devices.

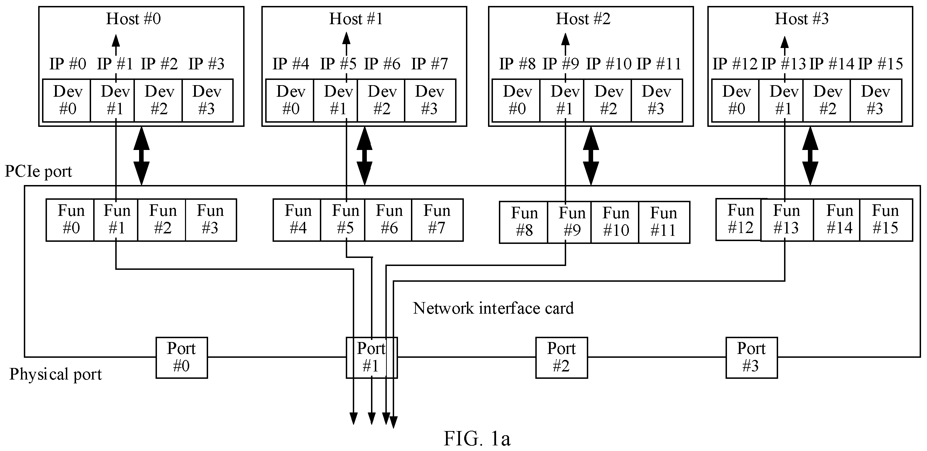

In some typical application scenarios of a Multi-Host network interface card, when a system uses and manages the multi-host network interface card, a plurality of hosts still each independently use device resources and IP address resources. FIG. 1a is a schematic diagram of a 4Host & 4Port network interface card. The network interface card includes four physical ports: Port #0 to Port #3, which are used for network communication, and four PCIe ports: PCIe Port #0 to PCIe Port #3, which are respectively used by Host #0 to Host #3. Fun #0 to Fun #3 are associated with PCIe Port #0 for Host #0 to use, and IP Address #0 to IP Address #3 are allocated. Fun #4 to Fun #7 are associated with PCIe Port #1 for Host #1 to use, and IP Address #4 to IP Address #7 are allocated. Fun #8 to Fun #11 are associated with PCIe Port #2 for Host #2 to use, and IP Address #8 to IP Address #11 are allocated. Fun #12 to Fun #15 are associated with PCIe Port #3 for Host #3 to use, and IP Address #12 to IP Address #15 are allocated. Dev #0 in Host #0, Dev #0 in Host #1, Dev #0 in Host #2, and Dev #0 in Host #3 may be connected to Port #0 through respective corresponding Funs. Dev #1 in Host #0, Dev #1 in Host #1, Dev #1 in Host #2, and Dev #1 in Host #3 may be connected to Port #1 through respective corresponding Funs. It can be seen that, in the foregoing scenario, an independent internet protocol (internet protocol, IP) address needs to be configured for a network interface card device instance of each host to communicate with an external device. When the network interface card corresponds to a plurality of hosts, a large quantity of IP address resources are to be occupied, resulting in IP address shortage.

The prior art and current state of technology includes US2014/0033442 A1, US2014/059266 A1 and US2014/122675 A1.

### SUMMARY

This application provides a network interface card management system, a packet processing method, and a device, so that a same IP address is used between different hosts, thereby saving IP address resources.

The invention is set out in the independent claims. Preferred embodiments are defined by the dependent claims.

In this implementation, an IP address is used at a system level instead of a single host level, in other words, a plurality of hosts share a same IP address, and the plurality of hosts externally provide a service as an entirety by using a single IP mechanism, so that not only an IP address resource can be saved, but also management work can be reduced, and reliability of an entire network interface card system can be improved.

In a specific implementation, the network interface card is specifically configured to determine the matched virtual interface group based on the destination information and a first correspondence, where the first correspondence includes a correspondence between the destination information and an identifier of the virtual interface group. In this implementation, a correspondence between the destination information and the virtual interface group may be pre-configured. After the destination information of the received packet is obtained, the matched virtual interface group may be determined based on the destination information. The plurality of virtual interfaces included in the virtual interface group correspond to the same destination information.

In this embodiment, the network interface card may determine the target virtual interface in the following two manners.

In one example, the network interface card is specifically configured to: determine the target virtual interface based on a port number of the packet, and send the packet to the target virtual interface, where the packet distribution policy indicates to perform forwarding based on the port number of the packet. In this implementation, after the virtual interface group corresponding to the destination information is determined, the packet may be forwarded based on the port number of the packet, to determine the target virtual interface, and then the packet is sent to the target virtual interface, so that subsequent processing is performed on the packet through the target virtual interface.

The network interface card is specifically configured to search for the target virtual interface based on the port number and a second correspondence, where the second correspondence includes a correspondence between the port number and the target virtual interface. The port number may be a source port number or a destination port number. That is, the network interface card may determine the target virtual interface based on the source port number of the packet, or may determine the target virtual interface based on the destination port number of the packet.

In another example, the network interface card is specifically configured to: determine the target virtual interface based on a forwarding table corresponding to the packet, and send the packet to the target virtual interface, where the packet distribution policy indicates to perform forwarding based on the forwarding table of the packet. In this implementation, the packet distribution policy indicates to perform forwarding based on the forwarding table of the packet. After determining the virtual interface group corresponding to the destination information, the network interface card obtains the forwarding table corresponding to the packet, determines the target virtual interface based on the forwarding table, and sends the packet to the target virtual interface, so that subsequent processing is performed on the packet through the target virtual interface.

In actual application, a host is often faulty. In this embodiment, a plurality of hosts may share one IP address, and the plurality of hosts externally provide a service as an entirety. Therefore, the network interface card is further configured to: determine a second host when a first host is faulty, and directly switch a service related to the first host from the first host to the second host. That is, the network interface card in this embodiment can implement active-active of a stateful service. This improves service reliability.

According to the invention, the network interface card is further configured to: when no virtual interface group that matches the destination information is found, send the packet to a virtual interface in each virtual interface group corresponding to the physical port. In this implementation, if no virtual interface group that matches the destination information is found, the network interface card may replicate the packet, and send packets to the virtual interfaces that are in each virtual interface group corresponding to the physical port.

In a specific implementation, a quantity of virtual interfaces corresponding to one PCIe port is the same as a quantity of device instances corresponding to a host associated with the PCIe port.

In a specific implementation, the destination information includes a destination media access control MAC address and/or a virtual local area network VLAN identifier of the packet.

According to a second aspect of embodiments of this application, a packet processing method is provided. The method includes: A network interface card receives a packet through a physical port, and parses the packet to obtain destination information; the network interface card determines a matched virtual interface group based on the destination information, where a plurality of virtual interfaces included in the virtual interface group belong to different PCIe ports; and the network interface card sends the packet to a target virtual interface according to a packet distribution policy corresponding to the virtual interface group, so that the packet is forwarded to a corresponding device instance through the target virtual interface.

According to the invention, that the network interface card determines a matched virtual interface group based on the destination information includes: The network interface card determines the matched virtual interface group based on the destination information and a first correspondence, where the first correspondence includes a correspondence between the destination information and an identifier of the virtual interface group.

In a specific implementation, that the network interface card sends the packet to a target virtual interface according to a packet distribution policy corresponding to the virtual interface group includes: The network interface card determines the target virtual interface according to the packet distribution policy and a port number of the packet, where the packet distribution policy indicates to perform forwarding based on the port number of the packet; and the network interface card sends the packet to the target virtual interface.

In a specific implementation, that the network interface card determines the target virtual interface according to the packet distribution policy and a port number of the packet includes: The network interface card searches for the target virtual interface based on the port number and a second correspondence, where the second correspondence includes a correspondence between the port number and the target virtual interface.

In a specific implementation, the port number is a destination port number or a source port number.

In a specific implementation, that the network interface card sends the packet to a target virtual interface according to a packet distribution policy corresponding to the virtual interface group includes: The network interface card determines the target virtual interface according to the packet distribution policy and a forwarding table corresponding to the packet, and sends the packet to the target virtual interface, where the packet distribution policy indicates to perform forwarding based on the forwarding table of the packet.

In a specific implementation, the method further includes: The network interface card determines a second host when a first host is faulty, where the first host and the second host are any two of the plurality of hosts; and the network interface card directly switches a service related to the first host from the first host to the second host, to process the service using the second host.

In a specific implementation, the method further includes: When no virtual interface group that matches the destination information is found, the network interface card sends the packet to a virtual interface in each virtual interface group corresponding to the physical port.

In a specific implementation, the destination information includes a destination MAC address and/or a virtual local area network VLAN identifier of the packet.

According to a third aspect of embodiments of this application, a packet processing apparatus is provided. The apparatus includes: a receiving unit, configured to receive a packet through a physical port; a parsing unit, configured to parse the packet to obtain destination information; a determining unit, configured to determine a matched virtual interface group based on the destination information, where a plurality of virtual interfaces included in the virtual interface group belong to different PCIe ports; and a sending unit, configured to send the packet to a target virtual interface according to a packet distribution policy corresponding to the virtual interface group, so that the packet is forwarded to a corresponding device instance through the target virtual interface.

In a specific implementation, the determining unit is specifically configured to determine the matched virtual interface group based on the destination information and a first correspondence, where the first correspondence includes a correspondence between the destination information and an identifier of the virtual interface group.

In a specific implementation, the sending unit is specifically configured to: determine the target virtual interface according to the packet distribution policy and a port number of the packet, where the packet distribution policy indicates to perform forwarding based on the port number of the packet; and send the packet to the target virtual interface.

In a specific implementation, the sending unit is specifically configured to search for the target virtual interface based on the port number and a second correspondence, where the second correspondence includes a correspondence between the port number and the target virtual interface.

In a specific implementation, the port number is a destination port number or a source port number.

In a specific implementation, the sending unit is specifically configured to: determine the target virtual interface according to the packet distribution policy and a forwarding table corresponding to the packet, and send the packet to the target virtual interface, where the packet distribution policy indicates to perform forwarding based on the forwarding table of the packet.

In a specific implementation, the apparatus further includes a switching unit. The determining unit is further configured to determine a second host when a first host is faulty, where the first host and the second host are any two of the plurality of hosts. The switching unit is configured to directly switch a service related to the first host from the first host to the second host, to process the service using the second host.

In a specific implementation, the sending unit is further configured to: when no virtual interface group that matches the destination information is found, send the packet to a virtual interface in each virtual interface group corresponding to the physical port.

In a specific implementation, the destination information includes a destination MAC address and/or a virtual local area network VLAN identifier of the packet.

According to a fourth aspect of embodiments of this application, a network device is provided. A memory is configured to store instructions. A processor is configured to execute the instructions that are in the memory, to perform the method according to the second aspect.

According to a fifth aspect of embodiments of this application, a computer-readable storage medium is provided. The computer-readable storage medium stores program code or instructions. When the program code or the instructions are run on a computer, the computer is enabled to perform the method according to the second aspect.

According to the technical solutions of this application, different IP addresses are allocated to device instances that belong to a same host, and a same IP address is allocated to device instances that belong to different hosts. In addition, a group of virtual interfaces that belong to different PCIe ports form a virtual interface group. A plurality of virtual interfaces included in the virtual interface group share one piece of destination information, for example, share a MAC address. When receiving a packet through a physical port, a network interface card obtains destination information by parsing the packet, determines the virtual interface group based on the destination information, and forwards the packet to a target virtual interface according to a packet distribution policy corresponding to the virtual interface group, so that the packet is forwarded to an associated device instance through the target virtual interface. It can be learned that, according to the technical solutions provided in embodiments of this application, IP addresses can be shared among different hosts, so that IP address resources are saved. In addition, the IP address is used at a system level instead of a single host level. In other words, a plurality of hosts share a same IP address, and the plurality of hosts externally provide a service as an entirety. This simplifies system management and operation and maintenance and improves system reliability.

### BRIEF DESCRIPTION OF DRAWINGS

To describe the technical solutions in embodiments of this application or in a conventional technology more clearly, the following briefly describes the accompanying drawings used to describe embodiments or the conventional technology.
FIG. 1a is a schematic diagram of a structure of a multi-host network interface card;
FIG. 1b is a schematic diagram of configuration of a multi-host network interface card;
FIG. 1c is a schematic diagram of multi-host network interface card management;
FIG. 2 is a schematic diagram of an application scenario according to an embodiment of this application;
FIG. 3 is a diagram of a structure of a network interface card management system according to an embodiment of this application;
FIG. 4a is a schematic diagram of a structure of a multi-host smart NIC according to an embodiment of this application;
FIG. 4b is a schematic diagram of another application scenario according to an embodiment of this application;
FIG. 5 is a flowchart of a packet processing method according to an embodiment of this application;
FIG. 6 is a framework diagram of network interface card management according to an embodiment of this application;
FIG. 7 is a schematic diagram of a structure of a packet processing apparatus according to an embodiment of this application;
FIG. 8 is a schematic diagram of a structure of a network device according to an embodiment of this application; and
FIG. 9 is a schematic diagram of a structure of a network device according to an embodiment of this application.

### DESCRIPTION OF EMBODIMENTS

To make a person skilled in the art understand the technical solutions in the present invention better, the following clearly and completely describes the technical solutions in embodiments of the present invention with reference to the accompanying drawings in embodiments of the present invention. It is clear that the described embodiments are merely a part rather than all of embodiments of the present invention.

For ease of understanding the technical solutions provided in embodiments of this application, the following describes technologies related in embodiments of this application.

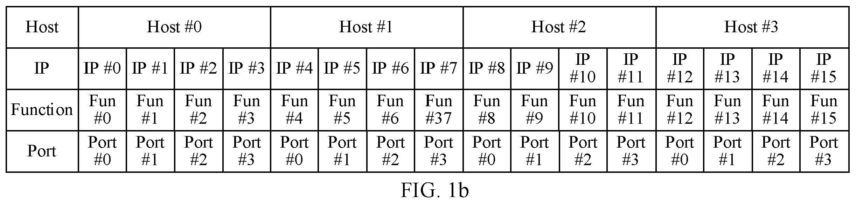

It can be learned from FIG. 1a that, in a conventional network interface card management system, independent IP addresses are allocated to different device instances corresponding to different hosts. When one host corresponds to a plurality of device instances, a group of independent IP addresses is allocated to each host, so that communication with the outside is performed by using the allocated IP addresses. For ease of understanding of a configuration relationship between a host, a Fun, and a physical port in the network interface card management system shown in FIG. 1a, refer to FIG. 1b. For four hosts in FIG. 1a, one IP address is allocated to a different device instance of a different host, and there are 16 IP addresses: IP #0 to IP #15. For example, four device instances corresponding to Host #0 are Dev #0, Dev #1, Dev #2, and Dev #3, and IP addresses respectively corresponding to the device instances are IP #0, IP #1, IP #2, and IP #3. Host #0 is associated with PCIe #0, and PCIe #0 includes four virtual interfaces: Fun #0, Fun #1, Fun #2, and Fun #3. Therefore, the device instance Dev #0 corresponds to Fun #0, Dev #1 corresponds to Fun #1, Dev #2 corresponds to Fun #2, and Dev #3 corresponds to Fun #3. The virtual interface Fun #0 performs communication through a physical interface Port #0, Fun #1 performs communication through a physical interface Port #1, Fun #2 performs communication through a physical interface Port #2, and Fun #3 performs communication through a physical interface Port #3.

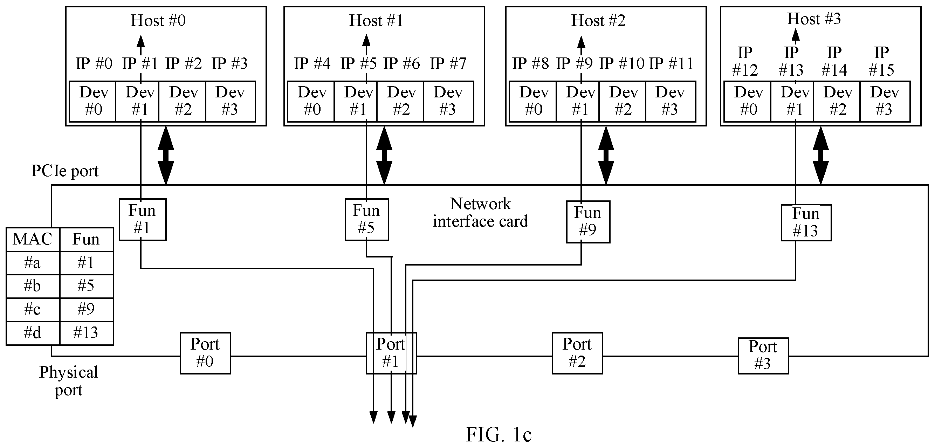

In an actual service scenario, when a network interface card sends a packet, a virtual interface associated with a host may be mapped to a matched physical port according to a specific rule, and then the packet is sent to a peer device through the physical port. When the physical port receives the packet, the network interface card performs table lookup based on a MAC address, determines a target virtual interface corresponding to the packet, and distributes, according to a specific packet distribution policy, the packet to a receive queue managed by the target virtual interface. For example, as shown in FIG. 1c, Fun #1 corresponds to MAC #a, Fun #5 corresponds to MAC #b, Fun #9 corresponds to MAC #c, Fun #13 corresponds to MAC #d, and Fun #1, Fun #5, Fun #9, and Fun #13 all correspond to a physical port 1. After receiving a packet, a network interface card determines a target virtual interface based on the foregoing correspondence.

It can be learned from the foregoing descriptions that the network interface card searches for the target virtual interface based on the MAC address, and an independent IP address needs to be configured for a device instance corresponding to each virtual interface. Consequently, IP address resource shortage is caused. In addition, when a host is abnormal and cannot externally provide a service, a communication link established between the peer device and the host is disconnected. After the peer device senses the disconnection, the peer device needs to re-establish a link with another host to perform service switching. For example, Fun #0 of Host #0 uses IP #0 to establish a connection with the peer device. If Host #0 is faulty and cannot externally provide a service, IP #0 needs to be migrated to another host. This brings large operation and maintenance difficulty and complexity. In addition, a current packet forwarding mechanism cannot implement an actual active-active (active-active, AA) capability of a stateful service. AA of the stateful service means implementing packet distribution between different hosts. To implement the AA of the stateful service, the network interface card, rather than a single host, needs to externally provide a link of the stateful service logically. However, in a conventional network interface card management system, independent IP addresses are allocated to each host, and IP address sharing cannot be implemented between different hosts. Consequently, the AA of the stateful service cannot be implemented.

On this basis, an embodiment of this application provides a network interface card management system. Different hosts of a multi-host network interface card share an IP address, so that a plurality of hosts externally provide a service as an entirety through a single IP address, thereby simplifying management and operation and maintenance and reducing system complexity. In addition, because different hosts can implement IP address sharing, the network interface card can externally provide a communication link of a stateful service logically, and not all host can externally provide a communication link. When one host is faulty, the network interface card can quickly switch a service of the host from the host to another host that shares the IP address. This improves service stability.

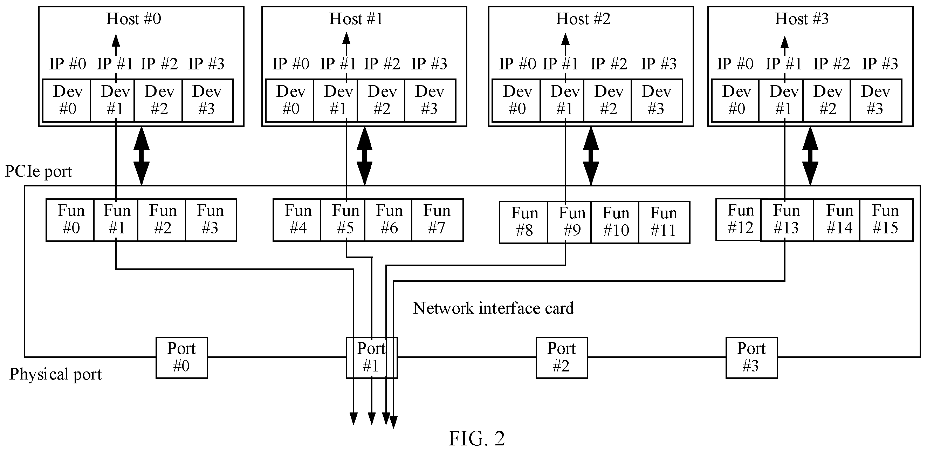

For ease of understanding, refer to a diagram of an application scenario shown in FIG. 2. In this application, a network interface card corresponds to four hosts Hosts: Host #0, Host #1, Host #2, and Host #3, and one host corresponds to four device instances Devs. Different IP addresses are allocated to different device instances of a same host, and a same IP address is allocated to device instances of different hosts. For example, IP addresses of a device instance Dev #0 in Host #0, a device instance Dev #0 in Host #1, a device instance Dev #0 in Host #2, and a device instance Dev #0 in Host #3 are the same and are all IP #0. A virtual interface group 1 includes a virtual interface Fun #0 associated with Host #0, a virtual interface Fun #4 associated with Host #1, a virtual interface Fun #8 associated with Host #2, and a virtual interface Fun #12 associated with Host #3, and the virtual interface group 1 corresponds to a physical port 0. Similarly, a virtual interface group 2 includes a virtual interface Fun #1 associated with Host #0, a virtual interface Fun #5 associated with Host #1, a virtual interface Fun #9 associated with Host #2, and a virtual interface Fun #13 associated with Host #3, and the virtual interface group 2 corresponds to a physical port 1. A virtual interface group 3 includes a virtual interface Fun #2 associated with Host #0, a virtual interface Fun #6 associated with Host #1, a virtual interface Fun #10 associated with Host #2, and a virtual interface Fun #14 associated with Host #3, and the virtual interface group 3 corresponds to a physical port 2. A virtual interface group 4 includes a virtual interface Fun #3 associated with Host #0, a virtual interface Fun #7 associated with Host #1, a virtual interface Fun #11 associated with Host #2, and a virtual interface Fun #15 associated with Host #3, and the virtual interface group 4 corresponds to a physical port 3.

During division of virtual interface groups, division may be performed based on a physical function (physical function, PF), or division may be performed based on a virtual function (virtual function, VF). The PF may virtualize a plurality of associated VFs. Alternatively, a virtual interface group function group may be implemented by one dummy function, in other words, the dummy function is not presented to hosts, and is used only as the function group. In this way, a process of searching for the function group may be completely consistent with a process of processing a transferred packet. For example, PF #0 is used as Function Group #0, VF #0.0, VF #1.0, VF # 2.0, and VF #3.0 are used as members of Function Group #0. The function group can alternatively be implemented by a logical entity. This depends on selection of the multi-host network interface card.

It should be noted that one physical port may correspond to a plurality of virtual interface groups. For example, one PCIe port in the network interface card corresponds to five virtual interfaces, and the network interface card includes four physical ports. In this case, there is a virtual interface group 5. The virtual interface group 5 corresponds to the physical port 1, and the physical port 1 corresponds to two virtual interface groups: the virtual interface group 2 and the virtual interface group 5. The virtual interface group 2 and the virtual interface group 5 correspond to different MAC addresses.

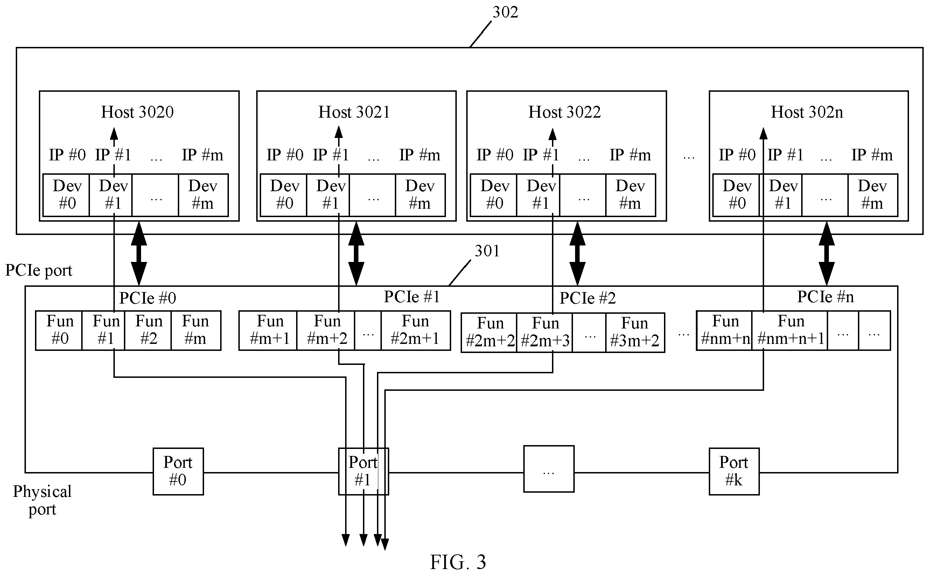

For ease of understanding, the following uses the application scenario shown in FIG. 2 as an example for description. FIG. 3 shows a network interface card management system according to an embodiment of this application. As shown in FIG. 3, the system includes a network interface card 301 and a plurality of hosts 302: a host 3020, a host 3021, a host 3022, a host 3023, ..., a host 302n, where n is a positive integer greater than or equal to 2. The network interface card includes a plurality of physical ports and a plurality of PCIe ports, for example, includes (k+1) physical ports Ports, where k is a positive integer greater than or equal to 1, and includes (n+1) PCIe ports. One PCIe port is associated with one host, one PCIe port corresponds to a plurality of virtual interfaces, for example, includes (m+1) virtual interfaces Funs, and one host corresponds to a plurality of device instances, for example, includes (m+1) device instances Devs. m is a positive integer greater than or equal to 2. Different IP addresses are allocated to different device instances that belong to a same host, and device instances that belong to different hosts correspond to a same IP address.

It should be noted that because one PCIe port is associated with one host, a plurality of virtual interfaces corresponding to the PCIe port are also associated with the host. That is, one host is associated with a plurality of virtual interfaces.

The network interface card 301 is configured to: receive a packet through the physical port, and parse the packet to obtain destination information. The destination information may be a destination MAC address and/or a virtual local area network (virtual local area network, VLAN) identifier in the packet. The VLAN identifier indicates a VLAN to which the packet belongs. For example, in FIG. 2, the network interface card receives a packet through Port #1, and parses the packet through a parsing module of the network interface card, to obtain a destination MAC address and/or a VLAN identifier.

After obtaining the destination information, the network interface card 301 is further configured to determine a matched virtual interface group based on the destination information. The virtual interface group includes a plurality of virtual interfaces, and the plurality of virtual interfaces belong to different PCIe ports. That is, the plurality of virtual interfaces included in the virtual interface group are associated with different hosts. Specifically, after obtaining the destination information, the network interface card 301 may determine the matched virtual interface group based on the destination information and a first correspondence, where the first correspondence includes a correspondence between the destination information and an identifier of the virtual interface group. To be specific, the correspondence between the destination information and the identifier of the virtual interface group may be pre-established. After the destination information of the received packet is obtained, the virtual interface group corresponding to the packet is determined based on the destination information and the correspondence. For example, a table of a correspondence between the destination MAC address and the identifier of the virtual interface group may be pre-established, or a table of a correspondence between the VLAN identifier and the identifier of the virtual interface group may be pre-established. For example, as shown in FIG. 2, after obtaining the packet through the Port 1 interface, the network interface card learns, through parsing, that the destination MAC address is MAC #a, and determines, through table lookup, that a virtual interface group corresponding to MAC #a is a Fun Group 1. The Fun Group 1 includes virtual interfaces Fun #1, Fun #5, Fun #9, and Fun #13.

After determining the virtual interface group corresponding to the packet, the network interface card 301 is further configured to send the packet to a target virtual interface according to a packet distribution policy corresponding to the virtual interface group, so that the packet is forwarded to a corresponding device instance through the target virtual interface. The packet distribution policy indicates packet forwarding. The packet distribution policy may be configured based on an actual application situation. For example, the packet distribution policy is forwarding based on a port number of a packet, or the packet distribution policy is forwarding based on a forwarding table corresponding to a packet.

In one case, the network interface card 301 is specifically configured to: determine the target virtual interface based on a port number of the packet, and send the packet to the target virtual interface. In this case, the packet distribution policy indicates to perform forwarding based on the port number of the packet. Specifically, the network interface card 301 obtains the port number from the packet, and searches for the target virtual interface based on the port number and a second correspondence. The second correspondence includes a correspondence between the port number and the target virtual interface. The port number may be a source port number or a destination port number. For example, the destination port number is used as an example. A correspondence between the destination port number and each virtual interface is pre-established. For example, a destination port number #x corresponds to the virtual interface Fun #1, a destination port number #y corresponds to the virtual interface Fun #5, a destination port number #z corresponds to the virtual interface Fun #9, and a destination port number #w corresponds to the virtual interface Fun #13. For example, if the destination port number of the packet is #z, it can be learned, through table lookup, that the corresponding target virtual interface is Fun #9.

In another case, the network interface card 301 is specifically configured to: determine the target virtual interface based on a forwarding table corresponding to the packet, and send the packet to the target virtual interface. In this case, the packet distribution policy indicates to perform forwarding based on the forwarding table of the packet, to implement forwarding of different types of packets based on different forwarding tables. That is, a correspondence between the forwarding table and the target virtual interface may be pre-established. After the forwarding table corresponding to the packet is obtained, the target virtual interface is determined based on the forwarding table and the correspondence.

In some application scenarios, the packet received by the network interface card through the physical port may be a broadcast packet, a multicast packet, or an unknown unicast packet. Such a type of packet does not have specific destination information, in other words, the network interface card cannot find a matched virtual interface group based on the destination information. In this case, a forwarding policy for the unknown unicast packet may be pre-configured in the network interface card, and the packet is forwarded according to the forwarding policy after the packet is received. In one case, the network interface card may send the packet to a virtual interface in each virtual interface group corresponding to the physical port. This type of packet may be an address resolution protocol (address resolution protocol, ARP) packet, a link layer discovery protocol (link layer discovery protocol, LLDP) packet, or the like. For example, the physical port #1 corresponds to two virtual interface groups, and each virtual interface group includes four virtual interfaces. In this case, the network interface card sends the received packet to eight virtual interfaces, so that the packet is sent to a corresponding device instance through each virtual interface. In another case, the network interface card may forward the packet to a specified virtual interface. For example, for an internet control message protocol (internet control message protocol, ICMP) packet, an ICMP request packet may be sent to a virtual interface Function corresponding to a host, and an ICMP response packet may be sent to a virtual interface Function of each host.

It can be learned from the foregoing descriptions that device instances of different hosts may use a same IP address. When a multi-host network interface card externally provides a service, a plurality of hosts may externally provide the service as an entirety, and a peer device does not need to establish a link to each host. In this case, the network interface card 301 is further configured to determine a second host when a first host is faulty, and directly switch a service related to the first host from the first host to the second host, to use the second host to process the related service, thereby implementing transition of a stateful service and improving stability of the network interface card. For example, in FIG. 2, both Dev #1 of the host Host #0 and Dev #1 of Host #1 use IP #1. When establishing a communication link, the peer device only needs to establish a link with IP #1, and does not need to sense whether a host is Host #0 or Host #1. Generally, Host #0 communicates with the peer end by using IP #1. When Host #0 is faulty, a service with IP #1 may be directly switched from Host #0 to Host #1, without a need to re-establish a link with Host #1.

It can be learned that, according to the technical solutions provided in embodiments of this application, IP addresses can be shared among different hosts, so that IP address resources are saved. In addition, the IP address is used at a system level instead of a single host level. In other words, a plurality of hosts share a same IP address, and the plurality of hosts externally provide a service as an entirety. This simplifies system management and operation and maintenance and improves system reliability.

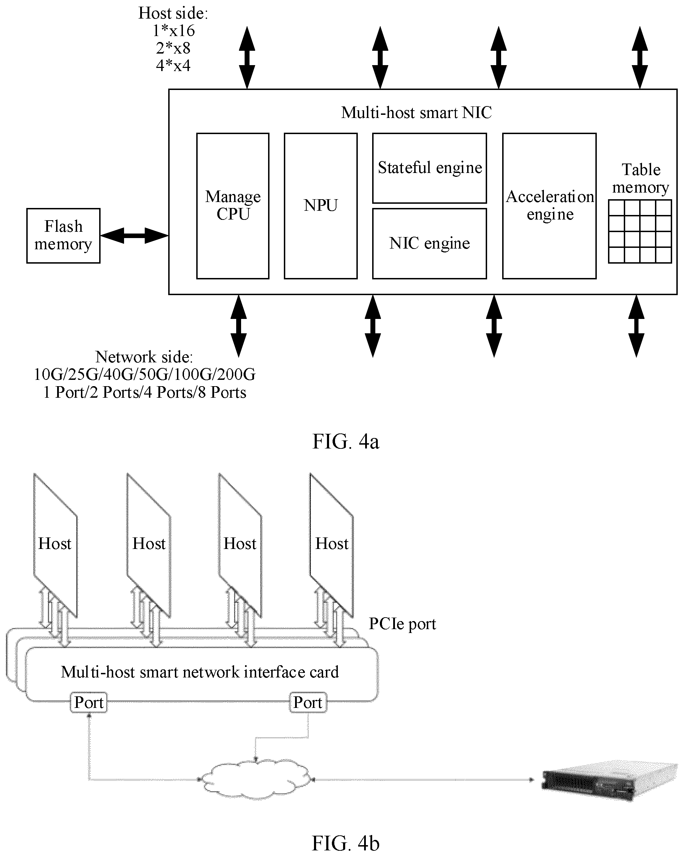

The multi-host network interface card in this embodiment of this application may be a smart network interface card chip. As shown in a schematic diagram of a structure of a smart network interface card in FIG. 4a, PCIe ports that are of the smart network interface card and that correspond to a host side may be configured as PCIe x16, and may be specifically configured as 1*x16 (one x16), 2*x8 (two x8s), or 4*x4 (four x4s). A bandwidth of a physical port corresponding to a network side may be configured as 10G/25G/40G/50G/100G/200G. A specification of the physical port can be configured as 1 Port/2 Ports/4 Ports/8 Ports. A manage central processing unit (manage central processing unit, Manage CPU) is configured to implement configuration and management of a control plane. An embedded neural network processing unit (neural network processing unit, NPU) is a programmable service processing CPU. A stateful engine (State-full Engine) includes a transmission control protocol offload engine (transmission control protocol offload engine, TOE), a remote direct memory access over converged ethernet (remote direct memory access over converged ethernet, ROCE), an internal small computer system interface offload engine (internet small computer system interface offload engine, IOE), and the like. A NIC engine is an acceleration engine for a NIC service. An accelerator (accelerator) is an acceleration engine that performs, for example, table lookup, hash, CRC, and checksum calculation. Specifically, a presentation form of the network interface card is shown in FIG. 4b.

Based on the network interface card management system provided above, an embodiment of this application provides a packet processing method. The following provides descriptions with reference to the accompanying drawings.

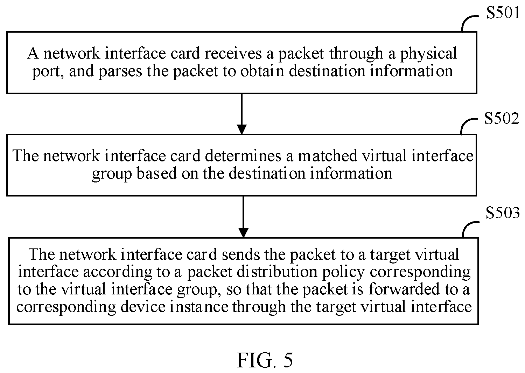

FIG. 5 is a flowchart of a packet processing method according to an embodiment of this application. As shown in FIG. 5, the method may include the following steps.

S501. A network interface card receives a packet through a physical port, and parses the packet to obtain destination information.

The destination information may be a destination MAC address and/or a VLAN identifier of the packet. For specific implementation of S501, refer to related descriptions in the embodiment in FIG. 3.

S502. The network interface card determines a matched virtual interface group based on the destination information, where a plurality of virtual interfaces included in the virtual interface group belong to different PCIe ports.

That the network interface card determines a matched virtual interface group based on the destination information may be: The network interface card determines the matched virtual interface group based on the destination information and a first correspondence. The first correspondence includes a correspondence between the destination information and an identifier of the virtual interface group. For specific implementation of S502, refer to related descriptions in the embodiment in FIG. 3.

S503. The network interface card sends the packet to a target virtual interface according to a packet distribution policy corresponding to the virtual interface group, so that the packet is forwarded, through the target virtual interface, to a device instance corresponding to a host.

In this embodiment, after determining the virtual interface group, the network interface card may determine the target virtual interface according to the packet distribution policy corresponding to the virtual interface group. Specifically, this may be implemented in the following manners. In one manner, the network interface card determines the target virtual interface according to the packet distribution policy and a port number of the packet, where the packet distribution policy indicates to perform forwarding based on the port number of the packet. For example, the network interface card can search for the target virtual interface based on the port number and a second correspondence, where the second correspondence includes a correspondence between the port number and the target virtual interface. The port number may be a source port number or a destination port number of the packet. In another manner, the network interface card determines the target virtual interface according to the packet distribution policy and a forwarding table corresponding to the packet, where the packet distribution policy indicates to perform forwarding based on the forwarding table of the packet. For specific implementation of S503, refer to related descriptions in the embodiment in FIG. 3.

In specific implementation, when no virtual interface group that matches the destination information is found, the network interface card sends the packet to a virtual interface in each virtual interface group corresponding to the physical port. That is, the received packet is processed on all the virtual interfaces in each virtual interface group corresponding to the physical port.

In a specific implementation, because different hosts may share an IP address, when the network interface card externally provides a service, the network interface card establishes a communication link to a peer device based on the IP address. In this case, the peer device does not need to sense a host that provides a service for the peer device. For example, the host that provides the service for the peer device is a first host. When the first host is faulty, the network interface card may determine a second host, and directly switch a service processed by the first host from the first host to the second host, to process the service using the second host. The first host and the second host are any two of a plurality of hosts. In this way, rapid transition of a stateful service is implemented, and product stability is improved.

It can be learned that, according to the technical solutions provided in embodiments of this application, IP addresses can be shared among different hosts, so that IP address resources are saved. In addition, the IP address is used at a system level instead of a single host level. In other words, a plurality of hosts share a same IP address, and the plurality of hosts externally provide a service as an entirety. This simplifies system management and operation and maintenance and improves system reliability.

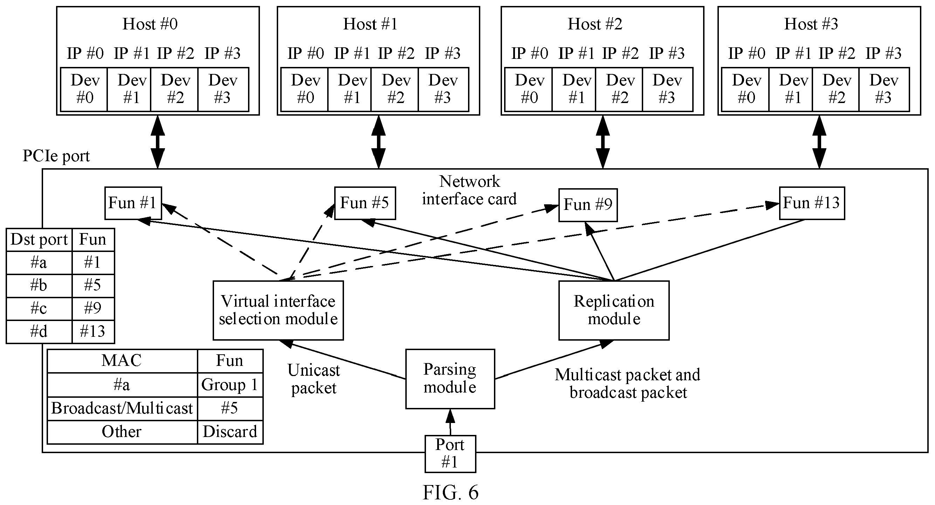

For ease of understanding, refer to an application framework diagram shown in FIG. 6. A network interface card includes a parsing module, a virtual interface selection module, and a replication module. After receiving a packet through a physical port #1, the network interface card parses the packet by using the parsing module to obtain a destination MAC address of the packet, and determines, through table lookup, whether there is a virtual interface group corresponding to the destination MAC address. When the destination MAC address is #a, a corresponding virtual interface group Group 1 may be determined. The virtual interface group Group 1 includes virtual interfaces Fun #1, Fun #5, Fun #9, and Fun #13. Then, the virtual interface selection module is used to determine a virtual interface corresponding to a destination port number of the packet, and the packet is forwarded to the determined virtual interface. When the destination MAC address is neither #a nor another address, the received packet is replicated by using the replication module, and replicated packets are sent to virtual interfaces that are in each virtual interface group corresponding to the physical port #1.

Based on the foregoing method embodiment, an embodiment of this application further provides a packet processing apparatus. The following provides descriptions with reference to the accompanying drawings.

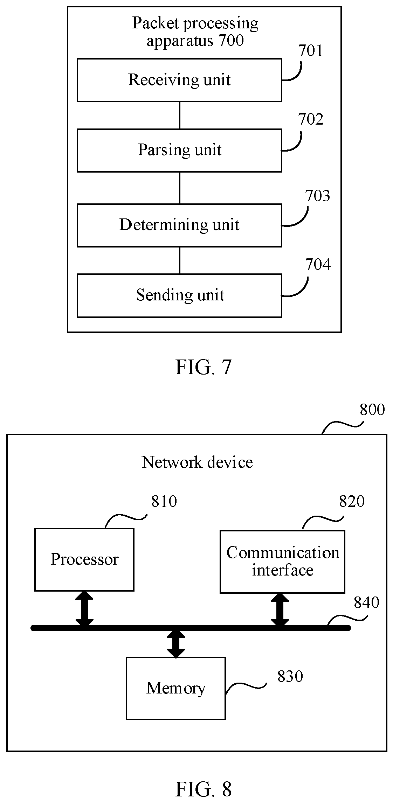

FIG. 7 is a diagram of a structure of a packet processing apparatus according to an embodiment of this application. The apparatus 700 may implement a function of the foregoing network interface card management system. The apparatus may include a receiving unit 701, a parsing unit 702, a determining unit 703, and a sending unit 704.

The receiving unit 701 is configured to receive a packet through a physical port.

The parsing unit 702 is configured to parse the packet to obtain destination information.

The determining unit 703 is configured to determine a matched virtual interface group based on the destination information, where a plurality of virtual interfaces included in the virtual interface group belong to different PCIe ports.

The sending unit 704 is configured to send the packet to a target virtual interface according to a packet distribution policy corresponding to the virtual interface group, so that the packet is forwarded to a corresponding device instance through the target virtual interface.

In a specific implementation, the determining unit 703 is specifically configured to determine the matched virtual interface group based on the destination information and a first correspondence. The first correspondence includes a correspondence between the destination information and an identifier of the virtual interface group.

In a specific implementation, the sending unit 704 is specifically configured to: determine the target virtual interface according to the packet distribution policy and a port number of the packet, where the packet distribution policy indicates to perform forwarding based on the port number of the packet; and send the packet to the target virtual interface.

In a specific implementation, the sending unit 704 is specifically configured to search for the target virtual interface based on the port number and a second correspondence, where the second correspondence includes a correspondence between the port number and the target virtual interface.

In a specific implementation, the port number is a destination port number or a source port number.

In a specific implementation, the sending unit 704 is specifically configured to: determine the target virtual interface according to the packet distribution policy and a forwarding table corresponding to the packet, and send the packet to the target virtual interface, where the packet distribution policy indicates to perform forwarding based on the forwarding table of the packet.

In a specific implementation, the apparatus further includes: a switching unit (not shown in the figure).

The determining unit 703 is further configured to determine a second host when a first host is faulty. The first host and the second host are any two of a plurality of hosts.

The switching unit is configured to directly switch a service related to the first host from the first host to the second host, to process the service using the second host.

In a specific implementation, the sending unit 704 is further configured to: when no virtual interface group that matches the destination information is found, send the packet to a virtual interface in each virtual interface group corresponding to the physical port.

In a specific implementation, the destination information includes a destination MAC address and/or a virtual local area network VLAN identifier of the packet.

It should be noted that, for implementation of each unit in this embodiment, refer to related descriptions in the method embodiment in FIG. 5, and details are not described herein again in this embodiment.

FIG. 8 is a schematic diagram of a structure of a network device according to an embodiment of this application. For example, the network device may be the network interface card in embodiments shown in FIG. 2 and FIG. 6, or may be implemented by the device of the packet processing apparatus 700 in the embodiment shown in FIG. 7.

Refer to FIG. 8. A network device 800 includes at least a processor 810. The network device 800 may further include a communication interface 820 and a memory 830. There may be one or more processors 810 in the network device 800, and one processor is used as an example in FIG. 8. In this embodiment of this application, the processor 810, the communication interface 820, and the memory 830 may be connected through a bus system or in another manner. In FIG. 8, an example in which the processor 810, the communication interface 820, and the memory 830 are connected through a bus system 840 is used.

The processor 810 may be a CPU, an NP, or a combination of the CPU and the NP. The processor 810 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The communication interface 820 is configured to receive and send a packet. Specifically, the communication interface 820 may include a receiving interface and a sending interface. The receiving interface may be configured to receive a packet, and the sending interface may be configured to send a packet. There may be one or more communication interfaces 820.

The memory 830 may include a volatile memory (English: volatile memory), for example, a random access memory (random access memory, RAM). The memory 830 may also include a non-volatile memory (English: non-volatile memory), for example, a flash memory (English: flash memory), a hard disk drive (hard disk drive, HDD), or a solid-state drive (solid-state drive, SSD). The memory 830 may also include a combination of memories of the foregoing types.

Optionally, the memory 830 stores an operating system and a program, an executable module or a data structure, or a subset thereof, or an extended set thereof, where the program may include various operation instructions for implementing various operations. The operating system may include various system programs, to implement various basic services and process a hardware-based task. The processor 810 may read the program that is in the memory 830, to implement the packet processing method provided in embodiments of this application.

The memory 830 may be a storage component in the network device 800, or may be a storage apparatus independent of the network device 800.

The bus system 840 may be a peripheral component interconnect (peripheral component interconnect, PCI) bus, an extended industry standard architecture (extended industry standard architecture, EISA) bus, or the like. The bus system 840 may be classified into an address bus, a data bus, a control bus, and the like. For ease of representation, only one thick line is for representing the bus in FIG. 8, but this does not mean that there is only one bus or only one type of bus.

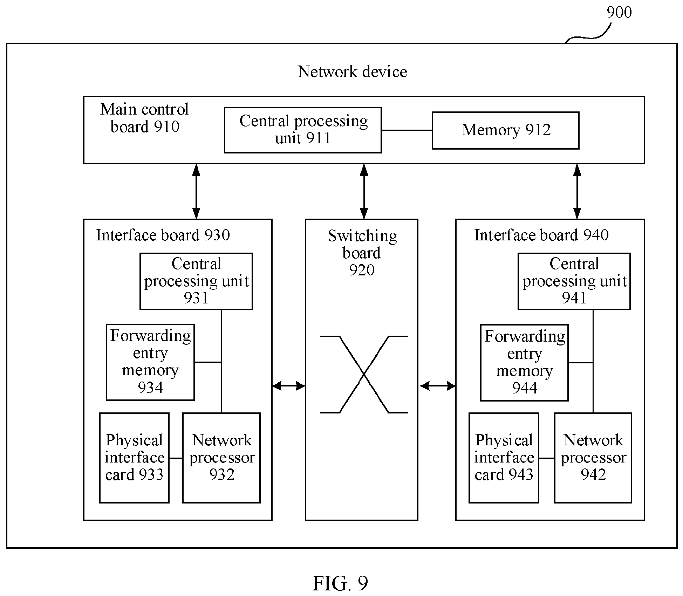

FIG. 9 is a schematic diagram of a structure of another network device 900 according to an embodiment of this application. The network device 900 may be configured as the network interface card in the foregoing embodiments, or may be implemented by the device of the packet processing apparatus 700 in the embodiment shown in FIG. 7.

The network device 900 includes a main control board 910 and an interface board 930.

The main control board 910 is also referred to as a main processing unit (main processing unit, MPU) or a route processor card (route processor card). The main control board 910 controls and manages each component in the network device 900, including functions of route calculation, device management, device maintenance, and protocol processing. The main control board 910 includes a central processing unit 911 and a memory 912.

The interface board 930 is also referred to as a line processing unit (line processing unit, LPU), a line card (line card), or a service board. The interface board 930 is configured to provide various service interfaces and forward a data packet. The service interface includes, but is not limited to, an Ethernet interface, a POS (Packet over SONET/SDH) interface, and the like. The Ethernet interface is, for example, a flexible Ethernet service interface (Flexible Ethernet Client, FlexE Client). The interface board 930 includes a central processing unit 931, a network processor 932, a forwarding entry memory 934, and a physical interface card (physical interface card, PIC) 933.

The central processing unit 931 in the interface board 930 is configured to: control and manage the interface board 930 and communicate with the central processing unit 911 that is on the main control board 910.

The network processor 932 is configured to forward a packet. A form of the network processor 932 may be a forwarding chip. Specifically, processing on an uplink packet includes processing at a packet ingress interface and forwarding table lookup, and processing on a downlink packet includes forwarding table lookup and the like.

The physical interface card 933 is configured to implement an interconnection function at a physical layer. Original traffic enters the interface board 930 from the physical interface card 933, and a processed packet is sent from the physical interface card 933. The physical interface card 933 includes at least one physical interface. The physical interface is also referred to as a physical port. The physical interface card 933, also referred to as a subcard, may be mounted on the interface board 930, and is responsible for converting an optical/electrical signal into a packet, performing validity check on the packet, and forwarding the packet to the network processor 932 for processing. In some embodiments, the central processing unit 931 on the interface board 930 may also perform a function of the network processor 932, for example, implement software forwarding based on a general-purpose CPU. In this case, the network processor 932 is not required in the physical interface card 933.

Optionally, the network device 900 includes a plurality of interface boards. For example, the network device 900 further includes an interface board 940. The interface board 940 includes a central processing unit 941, a network processor 942, a forwarding entry memory 944, and a physical interface card 943.

Optionally, the network device 900 further includes a switching board 920. The switching board 920 may also be referred to as a switch fabric unit (switch fabric unit, SFU). When the network device has a plurality of interface boards 930, the switching board 920 is configured to complete data exchange between interface boards. For example, the interface board 930 and the interface board 940 may communicate with each other through the switching board 920.

The main control board 910 and the interface board 930 are coupled. For example, the main control board 910, the interface board 930 and the interface board 940, and the switching board 920 are connected to a system backplane through a bus system to implement interworking. In a possible implementation, an inter-process communication (inter-process communication, IPC) channel is established between the main control board 910 and the interface board 930, and the main control board 910 and the interface board 930 communicate with each other through the IPC channel.

Logically, the network device 900 includes a control plane and a forwarding plane. The control plane includes the main control board 910 and the central processing unit 931. The forwarding plane includes components used for forwarding, for example, the forwarding entry memory 934, the physical interface card 933, and the network processor 932. The control plane performs functions such as a function of a router, generating a forwarding table, processing signaling and protocol packets, and configuring and maintaining a status of a device. The control plane delivers the generated forwarding table to the forwarding plane. On the forwarding plane, the network processor 932 looks up the forwarding table delivered by the control plane, to forward the packet received by the physical interface card 933. The forwarding table delivered by the control plane may be stored in the forwarding entry memory 934. In some embodiments, the control plane and the forwarding plane may be completely separated, and are not on a same device.

It should be understood that the receiving unit 701 in the packet processing apparatus 700 may be equivalent to the physical interface card 933 or the physical interface card 943 in the network device 900. The parsing unit 702, the determining unit 703, and the like in the packet processing apparatus 700 may be equivalent to the central processing unit 911 or the central processing unit 931 in the network device 900.

It should be understood that an operation performed on the interface board 940 is consistent with an operation performed on the interface board 930 in this embodiment of this application. For brevity, details are not described. It should be understood that the network device 900 in this embodiment may correspond to the controller or the network device in the foregoing method embodiment. The main control board 910, the interface board 930, and/or the interface board 940 in the network device 900 may implement functions and/or various steps implemented by the controller or the network device in the foregoing method embodiment. For brevity, details are not described herein again.

It should be understood that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the network device may not need the switching board, and the interface board provides a function of processing service data in an entire system. In a distributed forwarding architecture, the network device may have at least one switching board, and data exchange between a plurality of interface boards is implemented through the switching board, to provide a large-capacity data exchange and processing capability. Therefore, a data access and processing capability of a network device in the distributed architecture is higher than a data access and processing capability of a device in the centralized architecture. Optionally, the network device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained by combining the two central processing units. The device in this form (for example, a network device such as a low-end switch or router) has a weak data exchange and processing capability. A specific architecture that is to be used depends on a specific networking deployment scenario.

In some possible embodiments, the network device may be implemented as a virtualized device. For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine can be configured as a controller or a network device. For example, the virtual machine may implement a network device on a general-purpose physical server based on a network functions virtualization (Network Functions Virtualization, NFV) technology. The network device is a virtual host, a virtual router, or a virtual switch. By reading this application, a person skilled in the art may obtain, on the general-purpose physical server through virtualization based on the NFV technology, the network device having the foregoing functions. Details are not described herein.

It should be understood that the network devices in various types of the foregoing product forms separately have any function of the network device in the foregoing method embodiment. Details are not described herein.

An embodiment of this application further provides a chip, including a processor and an interface circuit. The interface circuit is configured to receive instructions and transmit the instructions to the processor. The processor may be, for example, a specific implementation form of the packet processing apparatus 700 shown in FIG. 7, and may be configured to perform the foregoing packet transmission method. The processor is coupled to a memory. The memory is configured to store a program or instructions. When the program or the instructions are executed by the processor, the chip system is enabled to implement the method in any one of the foregoing method embodiment.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip.

An embodiment of this application provides a computer-readable storage medium, including instructions or a computer program. When the instructions or the computer program is run on a computer, the computer is enabled to perform the packet processing method provided in the foregoing embodiment.

An embodiment of this application further provides a computer program product including instructions or a computer program. When the instructions or the computer program is run on a computer, the computer is enabled to perform the packet processing method provided in the foregoing embodiment.

It should be noted that embodiments in this specification are described in a progressive manner, each embodiment focuses on a difference from other embodiments, and for same or similar parts in embodiments, refer to these embodiments. The system or apparatus disclosed in embodiments corresponds to the method disclosed in an embodiment, and therefore is briefly described. For related parts, refer to the descriptions of the method.

It should be understood that, in this application, "at least one (item)" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one of a, b, or c may indicate a, b, c, "a and b", "a and c", "b and c", or "a, b, and c", where a, b, and c may be singular or plural.

It should be noted that in this specification, relational terms such as first and second are only used to distinguish one entity or operation from another, and do not necessarily require or imply that any actual relationship or sequence exists between these entities or operations. Moreover, the terms "include" or any other variant thereof is intended to cover a non-exclusive inclusion, so that a process, a method, an article, or a device that includes a list of elements not only includes those elements but also includes other elements that are not expressly listed, or further includes elements inherent to such a process, method, article, or device. An element preceded by "includes a ..." does not, without more constraints, preclude the presence of additional identical elements in the process, method, article, or device that includes the element.

In combination with embodiments disclosed in this specification, method or algorithm steps may be implemented by hardware, a software module executed by a processor, or a combination thereof. The software module may be configured in a random access memory (RAM), a memory, a read-only memory (ROM), an electrically programmable ROM, an electrically erasable programmable ROM, a register, a hard disk drive, a removable disk, a CD-ROM, or a storage medium in any other forms well-known in the technical field.

## Claims

1. A network interface card management system, wherein the system comprises: a network interface card (301) and a plurality of hosts (302),
wherein the network interface card comprises a plurality of physical ports and a plurality of multi-high-speed serial computer extension bus standard, PCIe, ports, one PCIe port is associated with one host, each PCIe port corresponds to a plurality of virtual interfaces, each host corresponds to a plurality of device instances, different internet protocol, IP, addresses are allocated to different device instances that belong to a same host, and device instances that belong to different hosts correspond to a same IP address;
the network interface card is configured to: receive a packet through the physical port, and parse the packet to obtain destination information;
the network interface card is further configured to determine a matched virtual interface group based on the destination information, wherein a plurality of virtual interfaces comprised in the virtual interface group belong to different PCIe ports; and
the network interface card is further configured to send the packet to a target virtual interface according to a packet distribution policy corresponding to the virtual interface group, so that the packet is forwarded to a corresponding device instance through the target virtual interface, wherein the network interface card is further configured to: when no virtual interface group that matches the destination information is found, send the packet to a virtual interface in each virtual interface group corresponding to the physical port, the network interface card is specifically configured to determine the matched virtual interface group based on the destination information and a first correspondence, wherein the first correspondence comprises a correspondence between the destination information and an identifier of the virtual interface group.

2. The system according to claim 1, wherein the network interface card is specifically configured to: determine the target virtual interface based on a port number of the packet, and send the packet to the target virtual interface, wherein the packet distribution policy indicates to perform forwarding based on the port number of the packet.

3. The system according to claim 2, wherein the network interface card is specifically configured to search for the target virtual interface based on the port number and a second correspondence, wherein the second correspondence comprises a correspondence between the port number and the target virtual interface.

4. The system according to claim 3, wherein the port number is a destination port number or a source port number.

5. The system according to claim 1, wherein the network interface card is specifically configured to: determine the target virtual interface based on a forwarding table corresponding to the packet, and send the packet to the target virtual interface, wherein the packet distribution policy indicates to perform forwarding based on the forwarding table of the packet.

6. The system according to any one of claims 1 to 5, wherein the network interface card is further configured to: determine a second host when a first host is faulty, and directly switch a service related to the first host from the first host to the second host.

7. A packet processing method, configured to be run on a system comprising: a network interface card (301) and a plurality of hosts (302),
wherein the network interface card comprises a plurality of physical ports and a plurality of multi-high-speed serial computer extension bus standard, PCIe, ports, one PCIe port is associated with one host, each PCIe port corresponds to a plurality of virtual interfaces, each host corresponds to a plurality of device instances, different internet protocol, IP, addresses are allocated to different device instances that belong to a same host, and device instances that belong to different hosts correspond to a same IP address;
wherein the method comprises:
receiving, by a network interface card, a packet through a physical port, and parsing the packet to obtain destination information;
determining, by the network interface card, a matched virtual interface group based on the destination information, wherein a plurality of virtual interfaces comprised in the virtual interface group belong to different PCIe ports; and
sending, by the network interface card, the packet to a target virtual interface according to a packet distribution policy corresponding to the virtual interface group, so that the packet is forwarded to a corresponding device instance through the target virtual interface, wherein the packet processing method further comprises: determining, by the network interface card, that no virtual interface group matches the destination information found, and sending, by the network interface card, the packet to a virtual interface in each virtual interface group corresponding to the physical port, wherein the determining, by the network interface card, a matched virtual interface group based on the destination information comprises:
determining, by the network interface card, the matched virtual interface group based on the destination information and a first correspondence, wherein the first correspondence comprises a correspondence between the destination information and an identifier of the virtual interface group.

8. The method according to claim 7, wherein the sending, by the network interface card, the packet to a target virtual interface according to a packet distribution policy corresponding to the virtual interface group comprises:
determining, by the network interface card, the target virtual interface according to the packet distribution policy and a port number of the packet, wherein the packet distribution policy indicates to perform forwarding based on the port number of the packet; and
sending, by the network interface card, the packet to the target virtual interface.

9. The method according to claim 8, wherein the determining, by the network interface card, the target virtual interface according to the packet distribution policy and a port number of the packet comprises:
searching for, by the network interface card, the target virtual interface based on the port number and a second correspondence, wherein the second correspondence comprises a correspondence between the port number and the target virtual interface.

10. The method according to any one of claims 7 to 9, wherein the method further comprises:
determining, by the network interface card, a second host when a first host is faulty, wherein the first host and the second host are any two of the plurality of hosts; and
directly switching, by the network interface card, a service related to the first host from the first host to the second host, to process the service using the second host.

11. A network device, wherein the device comprises a processor and a memory, wherein
the memory is configured to store instructions; and
the processor is configured to execute the instructions that are in the memory, to perform the method according to any one of claims 7 to 10.

12. A computer-readable storage medium, wherein the computer-readable storage medium stores program code or instructions; and when the program code or the instructions are run on a computer, the computer is enabled to perform the method according to any one of claims 7 to 10.

## Patentansprüche

1. Verwaltungssystem für Netzwerkschnittstellenkarten, wobei das System Folgendes umfasst: eine Netzwerkschnittstellenkarte (301) und eine Vielzahl von Hosts (302),
wobei die Netzwerkschnittstellenkarte eine Vielzahl von physischen Ports und eine Vielzahl von PCIe-Ports laut Standard zur seriellen Erweiterung mehrerer Hochgeschwindigkeitsbus von Computern umfasst, ein PCIe-Port mit einem Host assoziiert ist, jeder PCIe-Port einer Vielzahl von virtuellen Schnittstellen entspricht, jeder Host einer Vielzahl von Vorrichtungsinstanzen entspricht, unterschiedlichen Vorrichtungsinstanzen, die zu demselben Host gehören, unterschiedliche Internetprotokoll-Adressen, IP-Adressen, zugewiesen sind und Vorrichtungsinstanzen, die zu unterschiedlichen Hosts gehören, derselben IP-Adresse entsprechen;
die Netzwerkschnittstellenkarte dazu konfiguriert ist: ein Paket durch den physischen Port hindurch zu empfangen und das Paket zum Erlangen von Zielinformationen zu analysieren;
die Netzwerkschnittstellenkarte ferner dazu konfiguriert ist, eine passende virtuelle Schnittstellengruppe basierend auf den Zielinformationen zu bestimmen, wobei eine Vielzahl von virtuellen Schnittstellen, die in der virtuellen Schnittstellengruppe enthalten ist, zu unterschiedlichen PCIe-Ports gehört; und
die Netzwerkschnittstellenkarte ferner dazu konfiguriert ist, das Paket an eine virtuelle Zielschnittstelle gemäß einer Paketverteilungsrichtlinie entsprechend der virtuellen Schnittstellengruppe zu senden, so dass das Paket durch die virtuelle Zielschnittstelle hindurch an eine entsprechende Vorrichtungsinstanz weitergeleitet wird, wobei die Netzwerkschnittstellenkarte ferner dazu konfiguriert ist: wenn keine virtuelle Schnittstellengruppe gefunden wird, die zu den Zielinformationen passt, das Paket an eine virtuelle Schnittstelle in jeder virtuellen Schnittstellengruppe entsprechend dem physischen Port zu senden, die Netzwerkschnittstellenkarte speziell dazu konfiguriert ist, die passende virtuelle Schnittstellengruppe basierend auf den Zielinformationen und einer ersten Entsprechung zu bestimmen, wobei die erste Entsprechung eine Entsprechung zwischen den Zielinformationen und einer Kennung der virtuellen Schnittstellengruppe umfasst.

2. System nach Anspruch 1, wobei die Netzwerkschnittstellenkarte speziell dazu konfiguriert ist: die virtuelle Zielschnittstelle basierend auf einer Portnummer des Pakets zu bestimmen und das Paket an die virtuelle Zielschnittstelle zu senden, wobei die Paketverteilungsrichtlinie angibt, das Weiterleiten basierend auf der Portnummer des Pakets durchzuführen.

3. System nach Anspruch 2, wobei die Netzwerkschnittstellenkarte speziell dazu konfiguriert ist, nach der virtuellen Zielschnittstelle basierend auf der Portnummer und einer zweiten Entsprechung zu suchen, wobei die zweite Entsprechung eine Entsprechung zwischen der Portnummer und der virtuellen Zielschnittstelle umfasst.

4. System nach Anspruch 3, wobei die Portnummer eine Zielportnummer oder eine Quellportnummer ist.

5. System nach Anspruch 1, wobei die Netzwerkschnittstellenkarte speziell dazu konfiguriert ist: die virtuelle Zielschnittstelle basierend auf einer Weiterleitungstabelle entsprechend dem Paket zu bestimmen und das Paket an die virtuelle Zielschnittstelle zu senden, wobei die Paketverteilungsrichtlinie angibt, das Weiterleiten basierend auf der Weiterleitungstabelle des Pakets durchzuführen.

6. System nach einem der Ansprüche 1 bis 5, wobei die Netzwerkschnittstellenkarte ferner dazu konfiguriert ist: einen zweiten Host zu bestimmen, wenn ein erster Host fehlerhaft ist, und einen Dienst, der den ersten Host betrifft, direkt von dem ersten Host auf den zweiten Host umzuschalten.

7. Paketverarbeitungsverfahren, das dazu konfiguriert ist, auf einem System ausgeführt zu werden, umfassend: eine Netzwerkschnittstellenkarte (301) und eine Vielzahl von Hosts (302),
wobei die Netzwerkschnittstellenkarte eine Vielzahl von physischen Ports und eine Vielzahl von PCIe-Ports laut Standard zur seriellen Erweiterung mehrerer Hochgeschwindigkeitsbus von Computern umfasst, ein PCIe-Port mit einem Host assoziiert ist, jeder PCIe-Port einer Vielzahl von virtuellen Schnittstellen entspricht, jeder Host einer Vielzahl von Vorrichtungsinstanzen entspricht, unterschiedlichen Vorrichtungsinstanzen, die zu demselben Host gehören, unterschiedliche Internetprotokoll-Adressen, IP-Adressen, zugewiesen sind und Vorrichtungsinstanzen, die zu unterschiedlichen Hosts gehören, derselben IP-Adresse entsprechen;
wobei das Verfahren Folgendes umfasst:
Empfangen eines Pakets durch einen physischen Port hindurch durch eine Netzwerkschnittstellenkarte und Analysieren des Pakets, um Zielinformationen zu erlangen;
Bestimmen einer passenden virtuellen Schnittstellengruppe basierend auf den Zielinformationen durch die Netzwerkschnittstellenkarte, wobei eine Vielzahl von virtuellen Schnittstellen, die in der virtuellen Schnittstellengruppe enthalten ist, zu unterschiedlichen PCIe-Ports gehört; und
Senden des Pakets durch die Netzwerkschnittstellenkarte an eine virtuelle Zielschnittstelle gemäß einer Paketverteilungsrichtlinie entsprechend der virtuellen Schnittstellengruppe, so dass das Paket durch die virtuelle Zielschnittstelle hindurch an eine entsprechende Vorrichtungsinstanz weitergeleitet wird, wobei das Paketverarbeitungsverfahren ferner Folgendes umfasst: Bestimmen durch die Netzwerkschnittstellenkarte, dass keine virtuelle Schnittstellengruppe zu den gefundenen Zielinformationen passt,
und Senden des Pakets durch die Netzwerkschnittstellenkarte an eine virtuelle Schnittstelle in jeder virtuellen Schnittstellengruppe entsprechend dem physischen Port, wobei das Bestimmen einer passenden virtuellen Schnittstellengruppe durch die Netzwerkschnittstellenkarte basierend auf den Zielinformationen Folgendes umfasst:
Bestimmen der passenden virtuellen Schnittstellengruppe durch die Netzwerkschnittstellenkarte basierend auf den Zielinformationen und einer ersten Entsprechung, wobei die erste Entsprechung eine Entsprechung zwischen den Zielinformationen und einer Kennung der virtuellen Schnittstellengruppe umfasst.

8. Verfahren nach Anspruch 7, wobei das Senden des Pakets durch die Netzwerkschnittstellenkarte an eine virtuelle Zielschnittstelle gemäß einer Paketverteilungsrichtlinie entsprechend der virtuellen Schnittstellengruppe Folgendes umfasst:
Bestimmen der virtuellen Zielschnittstelle durch die Netzwerkschnittstellenkarte gemäß der Paketverteilungsrichtlinie und einer Portnummer des Pakets, wobei die Paketverteilungsrichtlinie angibt, das Weiterleiten basierend auf der Portnummer des Pakets durchzuführen; und
Senden des Pakets durch die Netzschnittstellenkarte an die virtuelle Zielschnittstelle.

9. Verfahren nach Anspruch 8, wobei das Bestimmen der virtuellen Zielschnittstelle durch die Netzwerkschnittstellenkarte gemäß der Paketverteilungsrichtlinie und einer Portnummer des Pakets Folgendes umfasst:
Suchen nach der virtuellen Zielschnittstelle durch die Netzwerkschnittstellenkarte basierend auf der Portnummer und
einer zweiten Entsprechung, wobei die zweite Entsprechung eine Entsprechung zwischen der Portnummer und der virtuellen Zielschnittstelle umfasst.

10. Verfahren nach einem der Ansprüche 7 bis 9, wobei das Verfahren ferner Folgendes umfasst:
Bestimmen eines zweiten Hosts durch die Netzwerkschnittstellenkarte, wenn ein erster Host fehlerhaft ist, wobei der erste Host und der zweite Host zwei beliebige der Vielzahl von Hosts sind; und
direktes Umschalten eines Dienstes, der den ersten Host betrifft, durch die Netzwerkschnittstellenkarte von dem ersten Host auf den zweiten Host, um den Dienst unter Verwendung des zweiten Hosts zu verarbeiten.

11. Netzwerkvorrichtung, wobei die Vorrichtung einen Prozessor und einen Speicher umfasst, wobei
der Speicher dazu konfiguriert ist, Anweisungen zu speichern; und
der Prozessor dazu konfiguriert ist, die Anweisungen auszuführen, die in dem Speicher vorliegen, um das Verfahren nach einem der Ansprüche 7 bis 10 durchzuführen.

12. Computerlesbares Speichermedium, wobei das computerlesbare Speichermedium Programmcode oder Anweisungen speichert; und wenn der Programmcode oder die Anweisungen auf einem Computer ausgeführt werden, der Computer in die Lage versetzt wird, das Verfahren nach einem der Ansprüche 7 bis 10 durchzuführen.

## Revendications

1. Système de gestion de carte d'interface réseau, dans lequel le système comprend : une carte d'interface réseau (301) et une pluralité d'hôtes (302),
dans lequel la carte d'interface réseau comprend une pluralité de ports physiques et une pluralité de ports standard de bus d'extension informatique série à haut débit, PCIe, un port PCIe est associé à un hôte, chaque port PCIe correspond à une pluralité d'interfaces virtuelles, chaque hôte correspond à une pluralité d'instances de dispositif, différentes adresses de protocole Internet, IP sont attribuées à différentes instances de dispositif qui appartiennent à un même hôte, et les instances de dispositif qui appartiennent à différents hôtes correspondent à une même adresse IP ;
la carte d'interface réseau est configurée pour : recevoir un paquet via le port physique, et analyser le paquet pour obtenir des informations de destination ;
la carte d'interface réseau est également configurée pour déterminer un groupe d'interfaces virtuelles correspondant sur la base des informations de destination, dans lequel une pluralité d'interfaces virtuelles comprises dans le groupe d'interfaces virtuelles appartient à différents ports PCIe ; et
la carte d'interface réseau est également configurée pour envoyer le paquet à une interface virtuelle cible selon une politique de distribution de paquets correspondant au groupe d'interfaces virtuelles, de sorte que le paquet est transmis à une instance de dispositif correspondante via l'interface virtuelle cible, dans lequel la carte d'interface réseau est également configurée pour : lorsqu'aucun groupe d'interfaces virtuelles qui correspond aux informations de destination n'est trouvé, envoyer le paquet à une interface virtuelle dans chaque groupe d'interfaces virtuelles correspondant au port physique, la carte d'interface réseau est spécifiquement configurée pour déterminer le groupe d'interfaces virtuelles correspondant sur la base des informations de destination et une première correspondance, dans lequel la première correspondance comprend une correspondance entre les informations de destination et un identifiant du groupe d'interfaces virtuelles.

2. Système selon la revendication 1, dans lequel la carte d'interface réseau est spécifiquement configurée pour : déterminer l'interface virtuelle cible sur la base d'un numéro de port du paquet, et envoyer le paquet à l'interface virtuelle cible, dans lequel la politique de distribution de paquets indique d'effectuer une transmission sur la base du numéro de port du paquet.

3. Système selon la revendication 2, dans lequel la carte d'interface réseau est spécifiquement configurée pour rechercher l'interface virtuelle cible sur la base du numéro de port et d'une seconde correspondance, dans lequel la seconde correspondance comprend une correspondance entre le numéro de port et l'interface virtuelle cible.

4. Système selon la revendication 3, dans lequel le numéro de port est un numéro de port de destination ou un numéro de port source.

5. Système selon la revendication 1, dans lequel la carte d'interface réseau est spécifiquement configurée pour : déterminer l'interface virtuelle cible sur la base d'une table de transmission correspondant au paquet, et envoyer le paquet à l'interface virtuelle cible, dans lequel la politique de distribution de paquets indique d'effectuer une transmission sur la base de la table de transmission du paquet.

6. Système selon l'une quelconque des revendications 1 à 5, dans lequel la carte d'interface réseau est également configurée pour : déterminer un second hôte lorsqu'un premier hôte est défectueux, et commuter directement un service lié au premier hôte du premier hôte au second hôte.

7. Procédé de traitement de paquets, configuré pour fonctionner sur un système comprenant : une carte d'interface réseau (301) et une pluralité d'hôtes (302),
dans lequel la carte d'interface réseau comprend une pluralité de ports physiques et une pluralité de ports standard de bus d'extension informatique série à haut débit, PCIe, un port PCIe est associé à un hôte, chaque port PCIe correspond à une pluralité d'interfaces virtuelles, chaque hôte correspond à une pluralité d'instances de dispositif, différentes adresses de protocole Internet, IP sont attribuées à différentes instances de dispositif qui appartiennent à un même hôte, et les instances de dispositif qui appartiennent à différents hôtes correspondent à une même adresse IP ;
dans lequel le procédé comprend :
la réception, par une carte d'interface réseau, d'un paquet via un port physique, et l'analyse du paquet pour obtenir des informations de destination ;
la détermination, par la carte d'interface réseau, d'un groupe d'interfaces virtuelles correspondant sur la base des informations de destination, dans lequel une pluralité d'interfaces virtuelles comprises dans le groupe d'interfaces virtuelles appartiennent à différents ports PCIe ; et
l'envoi, par la carte d'interface réseau, du paquet à une interface virtuelle cible selon une politique de distribution de paquets correspondant au groupe d'interfaces virtuelles, de sorte que le paquet est transmis à une instance de dispositif correspondante via l'interface virtuelle cible, dans lequel le procédé de traitement de paquets comprend également : la détermination, par la carte d'interface réseau, qu'aucun groupe d'interfaces virtuelles ne correspond aux informations de destination trouvées, et l'envoi, par la carte d'interface réseau, du paquet à une interface virtuelle dans chaque groupe d'interfaces virtuelles correspondant au port physique, dans lequel la détermination, par la carte d'interface réseau, d'un groupe d'interfaces virtuelles correspondant sur la base des informations de destination comprend :
la détermination, par la carte d'interface réseau, du groupe d'interfaces virtuelles correspondant sur la base des informations de destination et d'une première correspondance, dans lequel la première correspondance comprend une correspondance entre les informations de destination et un identifiant du groupe d'interfaces virtuelles.

8. Procédé selon la revendication 7, dans lequel l'envoi, par la carte d'interface réseau, du paquet à une interface virtuelle cible selon une politique de distribution de paquets correspondant au groupe d'interfaces virtuelles comprend :
la détermination, par la carte d'interface réseau, de l'interface virtuelle cible selon la politique de distribution de paquets et un numéro de port du paquet, dans lequel la politique de distribution de paquets indique d'effectuer une transmission sur la base du numéro de port du paquet ; et
l'envoi, par la carte d'interface réseau, du paquet à l'interface virtuelle cible.

9. Procédé selon la revendication 8, dans lequel la détermination, par la carte d'interface réseau, de l'interface virtuelle cible selon la politique de distribution de paquets et un numéro de port du paquet comprend :
la recherche, par la carte d'interface réseau, de l'interface virtuelle cible sur la base du numéro de port et d'une seconde correspondance, dans lequel la seconde correspondance comprend une correspondance entre le numéro de port et l'interface virtuelle cible.

10. Procédé selon l'une quelconque des revendications 7 à 9, dans lequel le procédé comprend également :
la détermination, par la carte d'interface réseau, d'un second hôte lorsqu'un premier hôte est défectueux, dans lequel le premier hôte et le second hôte sont deux hôtes quelconques de la pluralité d'hôtes ; et
la commutation directe, par la carte d'interface réseau, d'un service lié au premier hôte du premier hôte au second hôte, pour traiter le service à l'aide du second hôte.

11. Dispositif réseau, dans lequel le dispositif comprend un processeur et une mémoire, dans lequel
la mémoire est configurée pour stocker des instructions ; et
le processeur est configuré pour exécuter les instructions qui sont dans la mémoire, pour effectuer le procédé selon l'une quelconque des revendications 7 à 10.

12. Support de stockage lisible par ordinateur, dans lequel le support de stockage lisible par ordinateur stocke un code de programme ou des instructions ; et lorsque le code de programme ou les instructions fonctionnent sur un ordinateur, l'ordinateur est activé pour effectuer le procédé selon l'une quelconque des revendications 7 à 10.
